# EUROPEAN PATENT SPECIFICATION

(11) **EP 3 857 323 B1**
(45) Date of publication and mention of the grant of the patent: **10.07.2024**
(21) Application number: 18779333.6
(22) Date of filing: 25.09.2018
(51) Int. Cl.: G05D 1/00

(54) **ROBOTIC SYSTEM AND METHOD FOR PERFORMING A TASK**
ROBOTISCHES SYSTEM UND VERFAHREN ZUR AUSFÜHRUNG EINER AUFGABE
SYSTÈME ROBOTISÉ ET PROCÉDÉ POUR EFFECTUER UNE TÂCHE

(43) Date of publication of application: 04.08.2021
(73) Proprietor: Robert Bosch GmbH, 70442 Stuttgart (DE)
(72) Inventor: GAN, Bee Keen, Singapore 598731 (SG); SAGAR, Kaushal, Singapore 787082 (SG); LEMUTH, Karin, 70195 Stuttgart (DE); AH QUNE, Lloyd, Singapore 460037 (SG); OERTEL, Kai, 70569 Stuttgart (DE)
(86) International application number: PCT/EP2018/075920
(87) International publication number: WO 2020/064087

(56) References cited:
- EP-A1- 3 293 324
- US-A1- 2015 148 951
- US-B2- 6 836 701

## Description

### TECHNICAL FIELD

The present disclosure relates to a robotic system and a method for performing a task in an environment using the robotic system.

### BACKGROUND

Conventional floor cleaning robots work with predefined or randomized tour and time schedule, wherein a person may decide if the robot has to be send again to do the cleaning if the cleaning is unsatisfactory. Sometimes, even manual spot cleaning is required as the normal operation mode of a floor cleaning robot may not completely fulfill the cleaning, even if the tour is performed more than once.

Furthermore, reference is made to US 6 836 701 B2, US 2015/148951 A1, EP 3 293 324 A1.

### SUMMARY

It is therefore, object of the invention to provide an improved robotic system and an improved method for performing a task in an environment using the robotic system.

The service task may for example be to clean a floor or to mow grass. The system may be configured to, confirm or negated the demand.

Various embodiments may provide a method for performing a task in an environment using the robotic system according to any of the previous claims. The method may include acquiring the information representing a state of the environment at the determined location with the supervisory robot. The method may further include determining the demand. The method may further include confirming the demand. The method may further include, communicating the command to the service robot to perform the service task at the determined location.

The method according to various embodiments, may further include producing a map of the confirmed demand at the determined location, and of one or more confirmed additional demands at respective one or more additional determined locations. The command may further include to perform the service task and one or more additional service tasks at the one or more additional determined locations.

### BRIEF DESCRIPTION OF THE DRAWINGS

In the following description, various embodiments of the present disclosure are described with reference to the following drawings, in which:
- FIG. 1 shows a schematic illustration of a robotic system 100 in an environment 150, according to various embodiments;
- FIG. 2A shows an schematic illustration of an environment 150 with a surface 152, including a plurality of stains 155, 156 and a robotic system 100 including a service robot 120 at an initial cleaning stage of the surface 152;
- FIG. 2B is an schematic illustration of the environment 150 of FIG. 2A, after the service robot has finalized the cleaning;
- FIG. 2C is a schematic illustration of the environment 150 of FIG. 2B, wherein a supervisory robot 130 acquires information representing a state of the environment at a determined location and communicates with the control center;
- FIG. 2D is a schematic illustration of the environment 150 of FIG. 2C, wherein the control center 110 has communicated a command to the service robot for performing a task, e.g. cleaning, at the determined location 156;
- FIG. 3 shows a flowchart for a method 300 according to various embodiments;
- FIG. 4 shows a more detailed for a method 400 according to various embodiments.

### DETAILED DESCRIPTION

I the description which follows, the drawing figures are not necessarily to scale and certain features may be shown in generalized or schematic form in the interest of clarity and conciseness or for informational purposes. For example, the supervisory robot and the service robot are each shown with 2 wheels in the figures for illustration purposes, however each may have one, two, three or more wheels, or may move by means other than wheels. For example the supervisory robot may be a flying drone.

The following detailed description describes specific details and embodiments in which the invention may be practiced. These embodiments are described in sufficient detail to enable those skilled in the art to practice the invention. Other embodiments may be utilized and changes may be made without departing from the scope of the invention. The various embodiments are not necessarily mutually exclusive, as some embodiments can be combined with one or more other embodiments to form new embodiments.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

The invention illustratively described herein may suitably be practiced in the absence of any element or elements, limitation or limitations, not specifically disclosed herein. Thus, for example, the terms "comprising", "including," containing", etc. shall be read expansively and without limitation. The word "comprise" or variations such as "comprises" or "comprising" will accordingly be understood to imply the inclusion of a stated integer or groups of integers but not the exclusion of any other integer or group of integers. Additionally, the terms and expressions employed herein have been used as terms of description and not of limitation, and there is no intention in the use of such terms and expressions of excluding any equivalents of the features shown and described or portions thereof, but it is recognized that various modifications are possible within the scope of the invention claimed. Thus, it should be understood that although the present invention has been specifically disclosed by exemplary embodiments and optional features, modification and variation of the inventions embodied herein disclosed may be resorted to by those skilled in the art, and that such modifications and variations are considered to be within the scope of this invention.

The reference signs included in parenthesis in the claims are for ease of understanding of the invention and have no limiting effect on the scope of the claims.

The term "equal" as used in relation to a category, may mean, for the purpose of the present disclosure, that the categories are compatible, for example, that the service task the service robot is configured to perform, is compatible with the category of the demand.

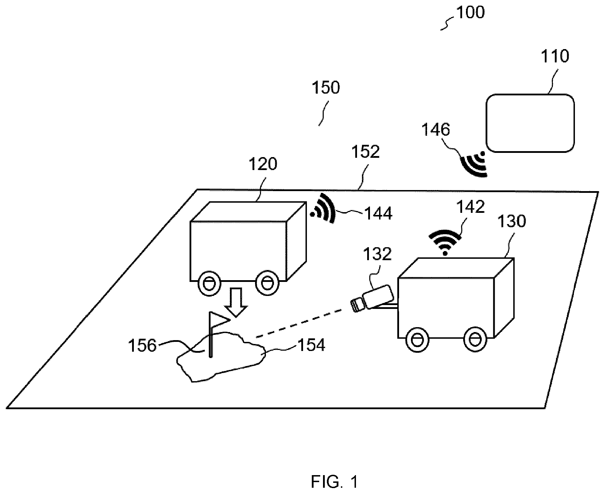

FIG. 1 shows a schematic illustration of a robotic system 100 in an environment 150, according to various embodiments. In FIG. 1, the environment 150 is shown including a surface 152 for illustration purposes. The surface may be, e.g., a floor. The robotic system 100 may include a control center 110, a service robot 120 configured to communicate with the control center and a supervisory robot 130 configured to communicate with the control center. For example, when ready to be used or in use mode, the control center 110 and the supervisory robot 130 are in operable communication with one another. The communication may be via, e.g. wireless local area network (e.g. WIFI), as indicated by the symbols 142, 144, and 146 for illustration purposes.

### SERVICE ROBOT

The service robot 120 may be configured to move in an environment, for example for performing a function, such as, e.g. floor cleaning, street cleaning, lawn mowing, a farming function, or combinations thereof. The service robot 120 may be further configured to perform a service task in the environment 150 by modifying a surface, for example, the surface 152, of the environment 150.

According to various embodiments, modifying a surface of the environment, as used in the present disclosure, may refer, for example, to adding material to the surface, removing material from the surface, or otherwise modifying a surface property, or combinations thereof.

For example: the service robot 120 may be configured to perform a floor cleaning, if the surface 152 is a floor, thus the service task is floor cleaning and the service robot 120 may be a floor cleaner robot as illustrated in FIG. 1, but is not limited thereto. For example: the service robot may be configured to perform a street cleaning, if the surface is a street, thus the service task is street cleaning and the service robot may be a street cleaner robot; the service robot may be configured to perform a lawn mowing, if the surface is a lawn, thus the service task is lawn mowing and the service robot may be a lawn mower; the service robot may be configured to perform a farming function (e.g. field fertilizing, plating, crop harvesting, pesticide application), if the surface is a farmland (e.g. a field), thus the service task is farming and the service robot may be a farming robot. The service robot may be configured to perform service tasks from different categories, for example, the service robot may be a multi-functional robot.

### SUPERVISORY ROBOT

Further referring to FIG. 1 as an example, according to various embodiments, the supervisory robot 130 may be configured to acquire information representing a state of the environment 152, at a determined location 156. For acquiring the information the supervisory robot 130 may do a scan of the surface. The supervisory robot may be configured to move. The exemplary location 156 is represented in the figures by a flag pole, for illustration purposes.

According to various embodiments, the determined location 156 may be determined by the supervisory robot 130. In such case, the supervisory robot 130 may be configured accordingly, for example, the supervisory robot may include location determination circuit for providing the determined location. The system may be configured to send the service robot to the determined location.

According to various embodiments, the supervisory robot 130 may be configured to communicate the determined location 156 to the control center 110. For example, the determined location 156 may be communicated with the information representing the state of the environment, with the demand, provided the demand is determined by the supervisory robot, or with both the information and the demand. Correspondently, the control center 110 may be configured to receive the determined location 156 from the supervisory robot 130.

According to various embodiments, the supervisory robot 130 may include a sensor unit to acquire information representing a state of the environment. The sensor unit may be exemplary configured to detect: stain, dust, oil, liquid, smell, or combinations thereof. According to various embodiments, the sensor unit may include one or more of: a camera, a dust sensor, an oil sensor, a stain sensor, a NIR sensor, a smell detector, a liquid sensor. FIG. 1 shows the supervisory robot 130 including a sensor 132 implemented as a camera, for illustration purposes.

According to various embodiments, a stain sensor may be an optical, chemical or conductivity sensor or a combination thereof configured to detect modified properties of the surface texture on a certain location, for example the determined location.

According to various embodiments, the sensor unit may be configured to compare data of the sensor unit with reference data. Such comparison may be used, for example to determine the demand. For example, with reference to FIG. 1, the supervisory robot 130 may use an image taken of the surface at the determined location 156, with the exemplary stain 154, and a reference image, for example, taken at the same determined location 156 when the floor was clean, meaning in the example, without the stain 154 to calculate a differential image. Thus, the information representing the state of the environment 150 at the determined location 156, may be, the differential image. The differential image may be used to compare against a pre-set threshold and to confirm or negate a demand. In yet another example the supervisory robot 130 may use a reflectivity measured of the surface at the determined location 156, with the exemplary stain 154, and a reference reflectivity, for example, measured at the same determined location 156 when the floor was clean, meaning in the example, without the stain 154 to calculate a relative contrast. Thus, the information representing the state of the environment 150 at the determined location 156, may be, the contrast. The relative contrast may be used to compare against a pre-set threshold and to confirm or negate a demand.

### DETERMINATION OF THE CATEGORY

According to various embodiments, the service task may have an associated service category. Furthermore, the demand may have an associated category of the demand. The term "category" used in the present disclosure, e.g., as in service task category or category of the demand, may refer to a function to be performed, for example the category may be floor cleaning, street cleaning, lawn mowing, a farming function, or combinations thereof. The service task category may be a property of the service robot. The demand category may be determined by the system, for example depending on the information representing the state of the environment at the determined location, and/or the type of sensor unit available (e.g. used) in the supervisory robot. For example for a supervisory robot including a sensor unit configured to detect grass height, the category of respectively determined demand may be lawn mowing. For a demand of a specific category, for example lawn mowing, the suitable service robot may be the one configured to perform a service task in the specific category, which category, in the example, is lawn mowing, and which service robot may be a lawn mower.

According to various embodiments, the system may be further configured such that the control center communicates a command to the service robot to perform the service task at the determined location, for example, in the case where the category of the demand is equal to the service task category. According to various embodiments the system may be configured to associate a category to the demand, and may be further configured to evaluate if the category of the demand is equal to the service task category, in which case the system, e.g. the supervisory robot or the control center, sends the command to the service robot. Alternatively or in addition, the system, e.g. the supervisory robot or the control center sends the demand category to the service robot, and the service robot evaluates if itself is able, e.g. configured to, perform the task with a category of the demand category.

In some embodiments, for the association of the category to the demand, the system may include a category determination circuit, which is configured to determine the category of the demand. The category determination circuit may be included in the supervisory robot or in the control center. For example, the supervisory robot may have a fixed associated demand for each sensor unit for example a first sensor unit may be configured to detect floor dust, and therefore, the demand category of the sensor unit may be floor cleaning. In this example, the demand may communicated be by the supervisory robot to the control center, at an initialization time and/or at the time of transmission of: (i) the information representing the state of the environment at the determined location, (ii) the demand, or of the combination of (i) and (ii). According to various embodiments, the category determination circuit may be implemented by software, for example in a microprocessing unit, e.g., included in the supervisory robot or the control center.

According to various embodiments, the evaluation if the category of the demand is equal to the service task category may be performed by the control center, for example by an evaluation circuit. The evaluation may be performed, by having the category of the demand previously determined, for example as explained above, and comparing the category of the demand with the category of the task, which the service robot is configured to perform. If there is a match, then the category of the demand is equal to the service task category. According to various embodiments, the evaluation circuit may be implemented by software, for example in a microprocessing unit, e.g., included in the supervisory robot or the control center.

According to various embodiments, the service robot may be configured to perform service tasks of different categories, for example the service task may be of vacuum cleaning with a service task category of cleaning, and an additional service task may be polishing with the additional service task category on enriching. Alternatively or in addition, the system may include one or more additional service robots, each having at least one associated service task with at least one associated service task category. Thus, with many options of service task categories, the evaluation may be performed, by having the category of the demand previously determined, for example as explained above, and comparing the category of the demand with each of the categories available in the system, and thus selecting the service robot (or additional service robot) which is configured to perform the service task.

In some embodiments, the category of the demand may be communicated (e.g. by the control center or the supervisory robot) to the service robot, e.g. together with the command or as part of the command. The service robot may be configured to evaluate if the category of the demand is equal to the service task category and if so, perform the task at the determined position.

### DETERMINATION OF THE DEMAND

According to various embodiments, the system may be configured to, based on the information representing the state of the environment at the determined location, determine a demand. For example to confirm or negated the demand.

According to various embodiments, the supervisory robot may be configured to determine the demand. Alternatively or in addition, the control center may be configured to determine the demand.

In some embodiments, the supervisory robot may be configured to determine the demand and to communicate the demand to the control center, which control center may be configured to receive the demand from the supervisory robot. Thus, the system may be configured such that the supervisory robot determines the demand and communicates the demand to the control center, which control center receives the demand from the supervisory robot.

In some embodiments, the supervisory robot may be configured to communicate the information representing the state of the environment at the determined location to the control center and the control center may configured to receive the information representing the state of the environment at the determined location from the supervisory robot and determine the demand. Thus, the system may be configured such that the supervisory robot communicates the information representing the state of the environment at the determined location to the control center, which control center receives the information representing the state of the environment at the determined location from the supervisory robot and determines the demand.

The determination of the demand, as used in the present disclosure, may refer to comparing the information representing the state of the environment at the determined location with a threshold, for example a pre-defined threshold. For example, if the category of the demand is lawn mowing, the threshold may be a certain grass height threshold, and if the state of the environment, e.g., the actual grass height (at the determined location) is higher than the grass height threshold, the demand is confirmed, otherwise the demand is negated. For example, if the grass height threshold is 3 cm and the state of the environment at the determined location reads 4 cm, then the demand is confirmed, or in contrast, if the state reads 2 cm, then the demand is negated.

According to various embodiments, the system may further be configured such that, for a confirmed demand, the control center communicates a command to the service robot. The command may indicate to the service robot that the service robot should perform the service task at the determined location. Accordingly, the service robot may be configured to receive the command from the control center and to carry out the command.

According to various embodiments, the service robot may be configured to move to a required location such that the service task may be performed at the determined positon. For example, the service robot may be configured to move independently to the location or may be assisted by the control center, for example the control center may steer the service robot to the required location. The required location is usually very close, e.g. within a range of the service robot, from the determined location. The deviation from the required location and the determined location may arise due to the distance between the reference location point of the service robot to a service task unit of the robot, for example between a center of the robot and a cleaning brush. Calculation for adjusting the required location to the determined location, may be done, for example by the control center or by the service robot itself.

In some embodiments, the service robot is configured to, in addition to perform the service task, to work autonomously in the environment. Thus, the service robot may perform its function, e.g. cleaning, of the environment independently if connected to the control center or not. For example, at some time, after the supervisory robot has acquired the information representing a state of the environment at the determined location, the system may issue a command to the service robot, which may have already finished his autonomous cleaning function, or not. The service robot may then move to the determined location and perform the task.

According to various embodiments, the supervisory robot may be further configured to perform an auxiliary task having an associated auxiliary task category, and wherein for a confirmed demand, the system, for example the control center or the supervisory robot, determines that the auxiliary task category is equal to the category of the demand, and the supervisory robot performs the auxiliary task. An example of an auxiliary task is an UV sterilization.

According to various embodiments, service robot may be selected from: a surface cleaner, a lawn cutter, a farming robot, a combination thereof. Examples of a surface cleaner are: a floor cleaner, a street cleaner, a combination thereof. Examples of a farming robot are: a field fertilizing robot, a plating robot, a crop harvesting robot, a pesticide application robot, a combination thereof.

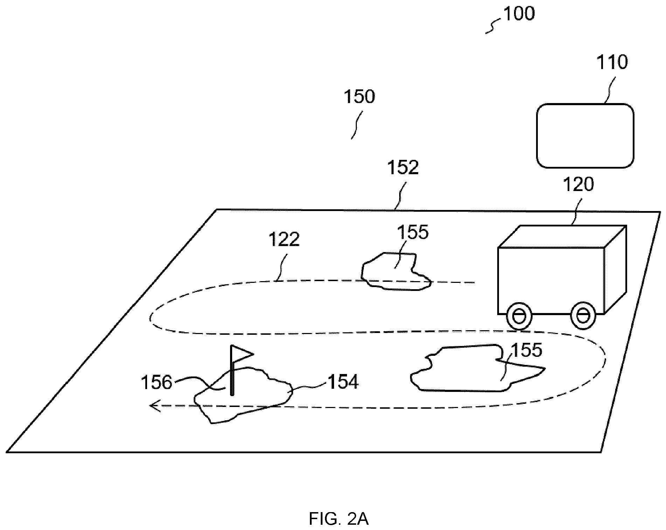

An example will be explained in the following, in connection with FIGs. 2A - 2D.

FIG. 2A shows an schematic illustration of an environment 150 with a surface 152, including a plurality of stains 155, 156 and a robotic system 100 including a service robot 120 at an initial cleaning stage of the surface 152. In the example, the service report is a surface cleaner, which is configured to perform the service task of cleaning the floor, by modifying the surface of the environment, for example removing a stain of the floor. As illustrated, the service robot 120 may do the cleaning according to a cleaning path 122, for example in autonomous manner. It can be seen in FIG. 2A that the floor contains two stains 155 and one stain 154.

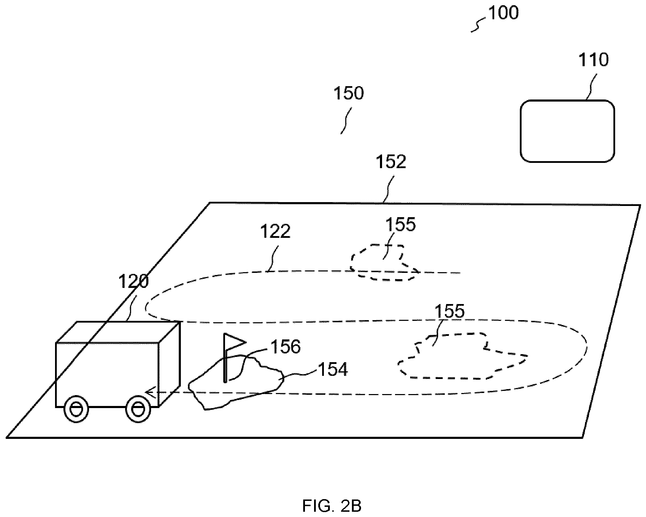

FIG. 2B is a schematic illustration of the environment 150 of FIG. 2A, after the service robot 120 has finalized the cleaning. As can be seen, the stains 155 (with previous location shown in dashed lines) were removed. However, stain 154 is still visible, as the service robot 120 was not able to clean stain 154 during its cleaning function. However, the cleaning robot already finished its cleaning function.

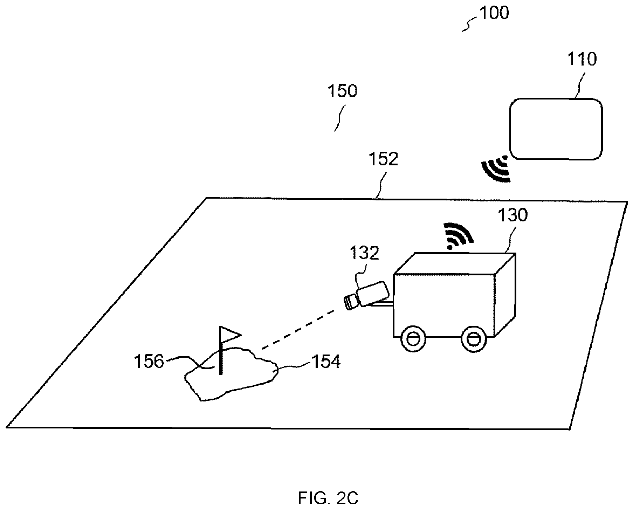

FIG. 2C is a schematic illustration of the environment 150 of FIG. 2B, wherein a supervisory robot 130 enters into action. The supervisory robot 130 acquires information, for example a certain contrast level, representing a state of the environment, e.g. a stain, at the determined location 156 during moving on the surface 152. The supervisory robot 130 communicates with the control center 110. Based on the information, the system determines a demand. The supervisory robot 130 may send the information to the control center and the control center may determine the demand, or the supervisory robot 130 may determine the demand and communicate it to the control center, in which case the supervisory robot 130 may also send the information to the control center. The supervisory robot 130 may further communicated the determined location 156 to the control center 110. In this example, for the determined location 156 the system confirms the demand, as the contrast level is above a threshold, in other words, the floor is dirty (contains a stain 154) at the determined positon 156. Since the demand and the service task are of the same category of floor cleaning, the service robot 120 is the suitable robot for the task. Thus, for a confirmed demand, the control center 110 communicates a command to the service robot 120 to perform the service task, namely cleaning the floor, at the determined location 156.

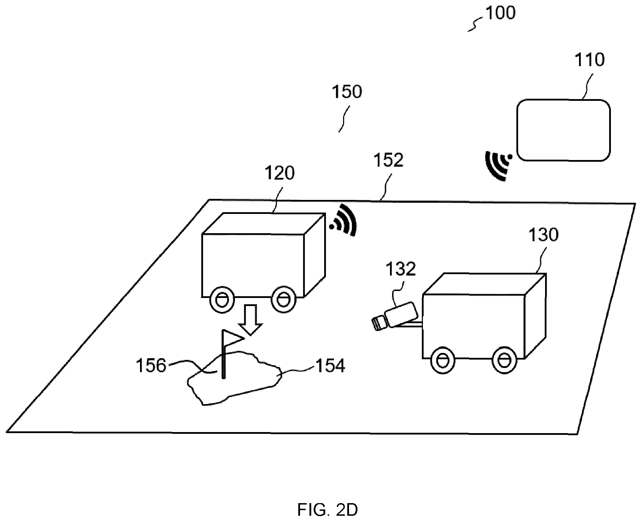

FIG. 2D is a schematic illustration of the environment 150 of FIG. 2C, wherein the control center 110 has communicated the command to the service robot 120 for performing cleaning the floor at the determined location 156. Thus the service robot moves a required location relative to the determined location, and performs the cleaning.

In one example, the supervisory robot, which is able to identify its location in a building or outdoors, is equipped with camera or dust, oil or other sensors, such as e.g. NIR spectroscopy, and is able to detect residues to check for cleanliness. Cleanliness could for example be established by comparing data of clean surface versus measured surface in specific locations, or relative contrast of surface with respect to surroundings of the same surface. If stains or uncleaned spots are detected, it may store the information for example as "cleaning required at the determined location", along with the required type of cleaning. If service robots (e.g. cleaning robots) are available, the system (e.g. the supervisory robot or the control center) may give qualified work orders (commands) to these cleaning robots by sending localization data as well as the category of the cleaning task to the cleaning robot or to the control center. If able to perform the cleaning tasks, such as deep UV sterilization, the mobile robot can do so without support of other cleaning robots.

### METHOD

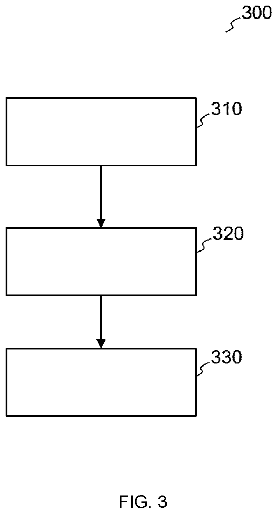

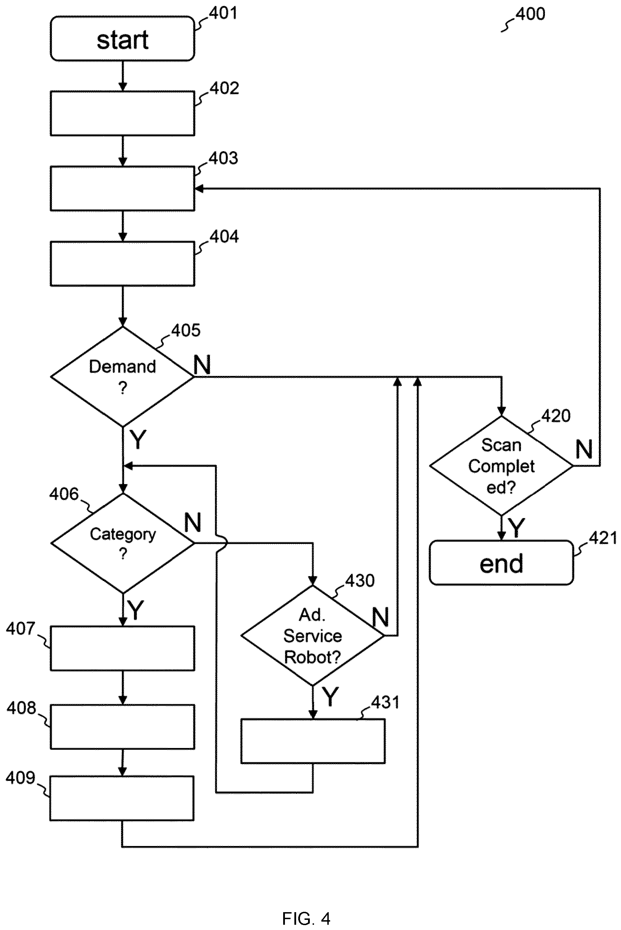

The method for performing a task in an environment will be explained in connections with the illustrations of FIG. 3 and FIG. 4. The following explanations are in accordance with various embodiments, and these explanations may be combined with features explained before in connection with the system.

FIG. 3 shows a flowchart for a method 300 according to various embodiments. According to various embodiments the method 300 for performing a task in an environment, with the robotic system according to various embodiments may include a method step 310 of acquiring the information representing a state of the environment at the determined location with the supervisory robot, may further include a method step 320 of determining the demand. For a confirmed demand, the method 300 may proceed with the method step 330, of communicating the command to the service robot to perform the service task at the determined location.

FIG. 4 shows a flowchart of an exemplary method according to various embodiments. Each of the start point 401 and the endpoint 421 is shown for illustrative purposes, as these points may be connected to other parts of larger method. Also the method may include other method steps not shown, and/or one or more shown method steps may be optional.

In an optional method step 402, the service robot may perform a function, for example a floor cleaning. For example, the function may be triggered by the method, or may be otherwise scheduled. Method step 403 may include re-locating the supervisory robot at a new location different from the determined location, wherein the new location becomes the (new) determined location. Method step 403 may be optional if the method has just started, wherein a start location of the supervisory robot may be used as the determined location. Method step 404 may include acquiring the information representing a state of the environment at the determined location with the supervisory robot. Method step 404 may be performed after method step 402, alternatively method step 404 may start without method step 402 being performed. In method step 404, based on the information representing the state of the environment at the determined location, the system determines a demand, as previously explained this demand may be determined, for example, by the supervisory robot or by the control center. If a demand is negated, the method 400 may continue with method step 420.

In method step 420, a check may be made whether the method may be finalized, for example, whether a scan of the surface by the supervisory robot has been completed, if the method may be finalized, then the method may proceed to step 421, for example, to end the method 400. Otherwise, if the method 400 may continue, it may continue, e.g. at method step 403, as previously explained.

If a demand is confirmed, the method 400 may continue with an evaluation step 406, wherein the category of the demand may be compared to the service task category, and if they are equal, the method 400 may proceed with method step 407. If the demands are not equal, the method 400 may proceed with method step 430.

In method step 407, the control center may communicate a command to the service robot to perform the service task at the determined location. Method 400 may proceed with method step 408 wherein the service robot receives the command from the control center. Method 400 may proceed with method step 409 wherein the service robot moves in the environment and perform the service task in the environment by modifying the surface at the determined location. Afterwards, the method may proceed with method step 420 as explained above.

In method step 430 it may be checked whether an additional service robot is available in the system, and if so, in a method step 431 the additional service robot may take place of the service robot for the continuation of the method 400, e.g. with method step 406. For example, this may be useful when the service robot does not have an associated service task category equal to the demand category, with the additional service robot taking place of the service robot, and the additional service robot having an associated service task category equal to the demand category, the service task may be successfully performed.

Instead of the conditional loop of method steps 406, 430, and 431, other methods of selecting the appropriate service robot having the associated service task category equal to the demand category may implement in the method 400. Also considerations may be taken that a service robot may be able to perform service tasks of different categories, and the method 400 may include, e.g. a step for determining the category of the service task of one or more service tasks of the service robot (or additional service robots).

In a variation of the method 400, instead of having an iteration wherein the supervisory robot moves to a new location each time, the method may be implemented such that the supervisory robot scans the surface at one or more determined points, for example the complete surface, the method creates a list of tasks to be performed, and then the method iterates through the list of tasks to be performed, sending commands to the service robot(s) to perform each service task of the list of tasks.

## Claims

1. A robotic system (100) comprising:
a control center (110);
a service robot (120) configured to communicate with the control center (110);
a supervisory robot (130) configured to communicate with the control center (110);
wherein the service robot is configured to move in an environment (150) and further configured to perform a service task in the environment (150) by modifying a surface (152) of the environment (150);
wherein the supervisory robot (130) is configured to acquire information representing a state of the environment (150) at a determined location (156); and wherein the system (100) is configured to, based on the information representing the state of the environment (150) at the determined location (156), determine a demand;
and wherein the system (100) is further configured such that, for a confirmed demand, the control center (110) communicates a command to the service robot (120) to perform the service task at the determined location (156);
and wherein the supervisory robot (130) comprises a sensor unit (132) to acquire the information representing the state of the environment (150), and a location determination circuit configured to provide the determined location (156);
and wherein the sensor unit (132) is configured to compare data of the sensor unit (132) with reference data;
and wherein the supervisory robot (130) is configured to use an image taken of the surface (152) at the determined location (156), and a reference image taken at the same determined location (156) when the floor was clean, to calculate a differential image, thus, the information representing the state of the environment (150) at the determined location (156) is the differential image;
or wherein the supervisory robot (130) is configured to use uses a reflectivity measured of the surface (152) taken at the determined location (156), and a reference reflectivity measured at the same determined location (156) when the floor was clean, to calculate a relative contrast, thus, the information representing the state of the environment (150) at the determined location (156) is the relative contrast.

2. The robotic system of claim 1,
wherein the differential image or the relative contrast is used to compare against a pre-set threshold and to confirm or negate a demand.

3. The robotic system of claim 1 or 2,
wherein the service task has an associated service category, the demand has an associated category of the demand, and wherein the system is further configured such that the control center (110) communicates a command to the service robot (120) to perform the service task at the determined location (156) only in the case where the category of the demand is equal to the service task category.

4. The robotic system of claim 3,
wherein the system is further configured to associate a category to the demand, and to evaluate if the category of the demand is equal to the service task category.

5. The robotic system of claim 4,
configured such that the evaluation if the category of the demand is equal to the service task category is performed by the control center (110).

6. The robotic system of any of claims 1 to 5,
wherein the supervisory robot (130) is configured to determine the demand and to communicate the demand to the control center (110), wherein the control center (110) is configured to receive the demand from the supervisory robot (130).

7. The robotic system of any of claims 1 to 5,
wherein the supervisory robot (130) is configured to communicate the information representing the state of the environment (150) at the determined location (156) to the control center (110) and the control center (110) is configured to receive the information representing the state of the environment (150) at the determined location (156) from the supervisory robot (130) and determine the demand.

8. The robotic system of any of the previous claims,
configured such that the determined location (156) is determined by the supervisory robot (130), wherein the supervisory robot (130) is configured to communicate the determined location (156) to the control center (110) and the control center (110) is configured to receive the determined location (156) from the supervisory robot (130).

9. The robotic system of any of the previous claims,
wherein the service robot (120) is configured to receive the command from the control center (110) and to carry out the command.

10. The robotic system of any of the previous claims,
wherein the service robot (120) is further configured to work autonomously in the environment (150).

11. The robotic system of any of the previous claims,
wherein the sensor unit (132) is configured to detect: stain, dust, oil, liquid or combinations thereof.

12. The robotic system of any of the previous claims,
wherein the sensor unit (132) comprises one or more of: a camera, a dust sensor, an oil sensor, a stain sensor, a NIR sensor, a liquid sensor.

13. The robotic system of any of claims 3 to 12,
wherein the supervisory robot (130) is further configured to perform an auxiliary task having an associated auxiliary task category, and wherein the system is further configured such that, for a confirmed demand, the system determines that the auxiliary task category is equal to the category of the demand, and the supervisory robot (130) performs the auxiliary task.

14. The robotic system of any of the previous claims,
wherein the service robot (120) is selected from: a surface cleaner, a lawn cutter, a farming robot, a combination thereof.

15. A method for performing a task in an environment (150) using the robotic system according to any of the previous claims, the method comprising:
- acquiring the information representing the state of the environment (150) at the determined location (156) with the supervisory robot (130);
- determining the demand;
- confirming the demand;
- communicating the command to the service robot (120) to perform the service task at the determined location (156).

## Patentansprüche

1. Robotersystem (100), das Folgendes umfasst:
ein Steuerzentrum (110);
einen Dienstroboter (120), der dazu ausgelegt ist, mit dem Steuerzentrum (110) zu kommunizieren;
einen Überwachungsroboter (130), der dazu ausgelegt ist, mit dem Steuerzentrum (110) zu kommunizieren;
wobei der Dienstroboter dazu ausgelegt ist, sich in einer Umgebung (150) zu bewegen, und ferner dazu ausgelegt ist, durch Modifizieren einer Fläche (152) der Umgebung (150) eine Dienstaufgabe in der Umgebung (150) durchzuführen;
wobei der Überwachungsroboter (130) dazu ausgelegt ist, Informationen zu erfassen, die einen Zustand der Umgebung (150) an einem bestimmten Ort (156) repräsentieren; und wobei das System (100) dazu ausgelegt ist, auf Basis der Informationen, die den Zustand der Umgebung (150) am bestimmten Ort (156) repräsentieren, einen Bedarf zu bestimmen;
und wobei das System (100) ferner derart ausgelegt ist, dass das Steuerzentrum (110) bei einem bestätigten Bedarf einen Befehl zum Durchführen der Dienstaufgabe am bestimmten Ort (156) zum Dienstroboter (120) kommuniziert;
und wobei der Überwachungsroboter (130) zum Erfassen der Informationen, die den Zustand der Umgebung (150) repräsentieren, eine Sensoreinheit (132) sowie eine Ortsbestimmungsschaltung umfasst, die dazu ausgelegt ist, den bestimmten Ort (156) bereitzustellen;
und wobei die Sensoreinheit (132) dazu ausgelegt ist, Daten der Sensoreinheit (132) mit Referenzdaten zu vergleichen;
und wobei der Überwachungsroboter (130) dazu ausgelegt ist, ein Bild, das von der Fläche (152) am bestimmten Ort (156) aufgenommen wurde, und ein Referenzbild, das am selben bestimmten Ort (156) aufgenommen wurde, als der Boden sauber war, zu verwenden, um so ein Differentialbild zu berechnen, wobei die Informationen, die den Zustand der Umgebung (150) am bestimmten Ort (156) repräsentieren, das Differentialbild sind;
oder wobei der Überwachungsroboter (130) dazu ausgelegt ist, ein Reflexionsvermögen, das an der Fläche (152) gemessen wurde, das am bestimmten Ort (156) genommen wurde, und ein Referenzreflexionsvermögen, das am selben bestimmten Ort (156) gemessen wurde, als der Boden sauber war, zu verwenden, um einen relativen Kontrast zu berechnen, wobei die Informationen, die den Zustand der Umgebung (150) am bestimmten Ort (156) repräsentieren, der relative Kontrast sind.

2. Robotersystem nach Anspruch 1,
wobei das Differentialbild oder der relative Kontrast verwendet wird, um mit einem voreingestellten Schwellwert zu vergleichen und einen Bedarf zu bestätigen oder zu negieren.

3. Robotersystem nach Anspruch 1 oder 2,
wobei die Dienstaufgabe eine verknüpfte Dienstkategorie aufweist, der Bedarf eine verknüpfte Kategorie des Bedarfs aufweist und wobei das System ferner derart ausgelegt ist, dass das Steuerzentrum (110) einen Befehl zum Durchführen der Dienstaufgabe am bestimmten Ort (156) nur in dem Fall zum Dienstroboter (120) kommuniziert, in dem die Kategorie des Bedarfs gleich der Dienstaufgabenkategorie ist.

4. Robotersystem nach Anspruch 3,
wobei das System ferner dazu ausgelegt ist, eine Kategorie mit dem Bedarf zu verknüpfen und zu beurteilen, ob die Kategorie des Bedarfs gleich der Dienstaufgabenkategorie ist.

5. Robotersystem nach Anspruch 4,
das derart ausgelegt ist, dass die Beurteilung, ob die Kategorie des Bedarfs gleich der Dienstaufgabenkategorie ist, vom Steuerzentrum (110) durchgeführt wird.

6. Robotersystem nach einem der Ansprüche 1 bis 5,
wobei der Überwachungsroboter (130) dazu ausgelegt ist, den Bedarf zu bestimmen und den Bedarf zum Steuerzentrum (110) zu kommunizieren, wobei das Steuerzentrum (110) dazu ausgelegt ist, den Bedarf vom Überwachungsroboter (130) zu empfangen.

7. Robotersystem nach einem der Ansprüche 1 bis 5,
wobei der Überwachungsroboter (130) dazu ausgelegt ist, die Informationen, die den Zustand der Umgebung (150) am bestimmten Ort (156) repräsentieren, zum Steuerzentrum (110) zu kommunizieren, und das Steuerzentrum (110) dazu ausgelegt ist, die Informationen, die den Zustand der Umgebung (150) am bestimmten Ort (156) repräsentieren, vom Überwachungsroboter (130) zu empfangen und den Bedarf zu bestimmen.

8. Robotersystem nach einem der vorhergehenden Ansprüche,
das derart ausgelegt ist, dass der bestimmte Ort (156) vom Überwachungsroboter (130) bestimmt wird, wobei der Überwachungsroboter (130) dazu ausgelegt ist, den bestimmten Ort (156) zum Steuerzentrum (110) zu kommunizieren, und das Steuerzentrum (110) dazu ausgelegt ist, den bestimmten Ort (156) vom Überwachungsroboter (130) zu empfangen.

9. Robotersystem nach einem der vorhergehenden Ansprüche,
wobei der Dienstroboter (120) dazu ausgelegt ist, den Befehl vom Steuerzentrum (110) zu empfangen und den Befehl umzusetzen.

10. Robotersystem nach einem der vorhergehenden Ansprüche,
wobei der Dienstroboter (120) ferner dazu ausgelegt ist, autonom in der Umgebung (150) zu arbeiten.

11. Robotersystem nach einem der vorhergehenden Ansprüche,
wobei die Sensoreinheit (132) dazu ausgelegt ist, Folgendes zu detektieren: Flecken, Staub, Öl, Flüssigkeit oder Kombinationen davon.

12. Robotersystem nach einem der vorhergehenden Ansprüche,
wobei die Sensoreinheit (132) eines oder mehreres von Folgendem umfasst: eine Kamera, einen Staubsensor, einen Ölsensor, einen Flecksensor, einen NIR-Sensor, einen Flüssigkeitssensor.

13. Robotersystem nach einem der Ansprüche 3 bis 12,
wobei der Überwachungsroboter (130) ferner dazu ausgelegt ist, eine Hilfsaufgabe mit einer verknüpften Hilfsaufgabenkategorie durchzuführen, und wobei das System ferner derart ausgelegt ist, dass das System bei einem bestätigten Bedarf bestimmt, dass die Hilfsaufgabenkategorie gleich der Kategorie des Bedarfs ist, und der Überwachungsroboter (130) die Hilfsaufgabe durchführt.

14. Robotersystem nach einem der vorhergehenden Ansprüche,
wobei der Dienstroboter (120) aus Folgendem ausgewählt wird: einem Flächenreiniger, einem Rasenschneider, einem Landwirtschaftsroboter, einer Kombination davon.

15. Verfahren zum Durchführen einer Aufgabe in einer Umgebung (150) unter Verwendung des Robotersystems gemäß einem der vorhergehenden Ansprüche, wobei das Verfahren Folgendes umfasst:
- Erfassen der Informationen, die den Zustand der Umgebung (150) am bestimmten Ort (156) repräsentieren, mit dem Überwachungsroboter (130);
- Bestimmen des Bedarfs;
- Bestätigen des Bedarfs;
- Kommunizieren des Befehls zum Durchführen der Dienstaufgabe am bestimmten Ort (156) zum Dienstroboter (120) .

## Revendications

1. Système robotique (100), comprenant :
un centre de commande (110) ;
un robot de service (120) configuré pour communiquer avec le centre de commande (110) ;
un robot de supervision (130) configuré pour communiquer avec le centre de commande (110) ;
le robot de service étant configuré pour se déplacer dans un environnement (150) et configuré en outre pour réaliser une tâche de service dans l'environnement (150) en modifiant une surface (152) de l'environnement (150) ;
le robot de supervision (130) étant configuré pour acquérir des informations représentant un état de l'environnement (150) à un endroit déterminé (156) ; et
le système (100) étant configuré pour, sur la base des informations représentant l'état de l'environnement (150) à l'endroit déterminé (156), déterminer un besoin ;
et le système (100) étant configuré en outre de sorte que, pour un besoin confirmé, le centre de commande (110) communique un ordre au robot de service (120) pour lui faire réaliser la tâche de service à l'endroit déterminé (156) ;
et le robot de supervision (130) comprenant une unité de détection (132) pour acquérir les informations représentant l'état de l'environnement (150), et un circuit de détermination d'endroit configuré pour fournir l'endroit déterminé (156) ;
et l'unité de détection (132) étant configurée pour comparer des données de l'unité de détection (132) à des données de référence ;
et le robot de supervision (130) étant configuré pour utiliser une image prise de la surface (152) à l'endroit déterminé (156) et une image de référence prise au même endroit déterminé (156) lorsque le sol était propre, pour calculer une image différentielle, les informations représentant l'état de l'environnement (150) à l'endroit déterminé (156) constituant ainsi l'image différentielle ;
ou le robot de supervision (130) étant configuré pour utiliser une réflectivité mesurée de la surface (152) prise à l'endroit déterminé (156) et une réflectivité de référence mesurée au même endroit déterminé (156) lorsque le sol était propre, pour calculer un contraste relatif, les informations représentant l'état de l'environnement (150) à l'endroit déterminé (156) constituant ainsi le contraste relatif.

2. Système robotique selon la revendication 1,
l'image différentielle ou le contraste relatif étant utilisée ou utilisé pour effectuer une comparaison avec un seuil préétabli et pour confirmer ou infirmer un besoin.

3. Système robotique selon la revendication 1 ou 2,
la tâche de service possédant une catégorie de service associée, le besoin possédant une catégorie associée du besoin, et le système étant configuré en outre de sorte que le centre de commande (110) communique un ordre au robot de service (120) pour lui faire réaliser la tâche de service à l'endroit déterminé (156) uniquement dans le cas où la catégorie du besoin correspond à la catégorie de la tâche de service.

4. Système robotique selon la revendication 3,
le système étant configuré en outre pour associer une catégorie au besoin, et pour évaluer si la catégorie du besoin correspond à la catégorie de la tâche de service.

5. Système robotique selon la revendication 4,
configuré de sorte que l'évaluation si la catégorie du besoin correspond à la catégorie de la tâche de service est réalisée par le centre de commande (110).

6. Système robotique selon l'une quelconque des revendications 1 à 5,
le robot de supervision (130) étant configuré pour déterminer le besoin et pour communiquer le besoin au centre de commande (110), le centre de commande (110) étant configuré pour recevoir le besoin depuis le robot de supervision (130).

7. Système robotique selon l'une quelconque des revendications 1 à 5,
le robot de supervision (130) étant configuré pour communiquer les informations représentant l'état de l'environnement (150) à l'endroit déterminé (156) au centre de commande (110) et le centre de commande (110) étant configuré pour recevoir les informations représentant l'état de l'environnement (150) à l'endroit déterminé (156) depuis le robot de supervision (130) et déterminer le besoin.

8. Système robotique selon l'une quelconque des revendications précédentes,
configuré de sorte que l'endroit déterminé (156) soit déterminé par le robot de supervision (130), le robot de supervision (130) étant configuré pour communiquer l'endroit déterminé (156) au centre de commande (110) et le centre de commande (110) étant configuré pour recevoir l'endroit déterminé (156) depuis le robot de supervision (130) .

9. Système robotique selon l'une quelconque des revendications précédentes,
le robot de service (120) étant configuré pour recevoir l'ordre depuis le centre de commande (110) et pour exécuter l'ordre.

10. Système robotique selon l'une quelconque des revendications précédentes,
le robot de service (120) étant configuré en outre pour fonctionner de manière autonome dans l'environnement (150) .

11. Système robotique selon l'une quelconque des revendications précédentes,
l'unité de détection (132) étant configurée pour détecter : une tache, de la poussière, de l'huile, du liquide ou des combinaisons de ceux-ci.

12. Système robotique selon l'une quelconque des revendications précédentes,
l'unité de détection (132) comprenant : une caméra et/ou un détecteur de poussière et/ou un détecteur d'huile et/ou un détecteur de tache et/ou un détecteur NIR et/ou un détecteur de liquide.

13. Système robotique selon l'une quelconque des revendications 3 à 12,
le robot de supervision (130) étant configuré en outre pour réaliser une tâche auxiliaire possédant une catégorie de tâche auxiliaire associée, et le système étant configuré en outre de sorte que, pour un besoin confirmé, le système détermine que la catégorie de tâche auxiliaire correspond à la catégorie du besoin, et le robot de supervision (130) réalise la tâche auxiliaire.

14. Système robotique selon l'une quelconque des revendications précédentes,
le robot de service (120) étant sélectionné parmi : un nettoyeur de surface, une tondeuse à gazon, un robot agricole, une combinaison de ceux-ci.

15. Procédé de réalisation d'une tâche dans un environnement (150) à l'aide du système robotique selon l'une quelconque des revendications précédentes, le procédé comprenant :
- l'acquisition des informations représentant l'état de l'environnement (150) à l'endroit déterminé (156) au moyen du robot de supervision (130) ;
- la détermination du besoin ;
- la confirmation du besoin ;
- la communication du besoin au robot de service (120) pour lui faire réaliser la tâche de service à l'endroit déterminé (156).
